# FASCICULE DE BREVET EUROPEEN

(11) **EP 3 700 751 B1**
(45) Date de publication et mention de la délivrance du brevet: **11.08.2021**
(21) Numéro de dépôt: 18765959.4
(22) Date de dépôt: 16.08.2018
(51) Int. Cl.: B41F 13/08, B41F 13/10, F16C 13/00

(54) **EMBOUT POUR ROULEAUX DE MACHINE INDUSTRIELLE**
ENDBESCHLAG FÜR INDUSTRIELLE MASCHINENWALZEN
END-FITTING FOR INDUSTRIAL MACHINE ROLLERS

(30) Priorité: 26.10.2017 FR 1760117
(43) Date de publication de la demande: 02.09.2020
(73) Titulaire: Epsilon Composite, 33340 Gaillan en Medoc (FR)
(72) Inventeur: CHAUMET, Yann, 33340 Gaillan en Medoc (FR); BARBOT, Yann, 33480 Avensan (FR)
(74) Mandataire: Novagraaf Technologies
(86) Numéro de dépôt international: PCT/FR2018/052069
(87) Numéro de publication internationale: WO 2019/081823

(56) Documents cités:
- DE-A1- 1 575 639
- FR-A1- 2 227 507

## Description

La présente invention se rapporte à un embout destiné à constituer une entretoise entre deux tubes, constituant un rouleau utilisé notamment comme rouleau d'impression, en particulier pour la flexographie. Les deux tubes sont un tube intérieur et un tube extérieur, le tube intérieur pouvant être constitué de l'arbre de rotation du rouleau ou d'un tube séparé de l'arbre de rotation.

Il existe des rouleaux d'impression constitués de deux tubes cylindriques sensiblement concentriques, le tube intérieur, disposé sur un arbre, constitue un tube de guidage tandis que le tube extérieur sert à l'impression.

Les deux tubes doivent présenter une distance constante afin de garantir une rotation harmonieuse du rouleau, un embout est placé à chaque extrémité ou des nervures sont disposées longitudinalement entre les deux tubes. Il faut également que le rouleau soit équilibré afin d'éviter tout balourd lors de la rotation, il peut être nécessaire d'ajouter des contrepoints à l'intérieur du rouleau. Les rouleaux sont souvent de grande taille, par exemple un diamètre de 75 à 1000 mm et une longueur de 500mm et 5000mm, et donc très lourds par exemple 10 à 500 kg.

Les deux tubes sont rendus solidaires par le collage des embouts ou par les nervures longitudinales, il n'est donc pas possible de remplacer le tube de guidage sans le détruire. Dans le cas où l'on utilise des embouts, on doit éliminer une partie de l'embout (le diamètre intérieur) et détruire le tube de guidage lors de l'extraction. Il faut ensuite éliminer la colle, repositionner un tube neuf et le coller puis remettre en condition opérationnelle l'embout par l'ajout d'une nouvelle pièce.

Les rouleaux d'impression par flexographie nécessitent un circuit d'air à l'intérieur du rouleau. L'air arrive par l'arbre au centre du rouleau et doit être dirigé vers des buses, réparties sur la surface du tube extérieur. Les buses sont alimentées en air par des tuyaux placés en dehors du tube et reliant les buses à l'entretoise. Le plus souvent on utilise les embouts pour un convoyage direct de l'air du diamètre intérieur de l'embout vers le diamètre extérieur du rouleau, par un perçage radial de l'embout. Il est ainsi nécessaire de prévoir un indexage angulaire de l'embout sur l'alimentation de l'air d'une part et sur les canaux du tube extérieurs.

Le plus souvent le circuit d'air dans l'embout est réalisé par perçage dudit embout. Cependant, d'une part, ces trous sont difficiles à dimensionner et ils peuvent se boucher et d'autre part, il n'est pas possible d'obtenir de petits diamètres.

Il existe également, des rouleaux d'impression comprenant un arbre relié à deux tubes concentriques, un extérieur poreux et un intérieur avec des rainures périphériques ouvertes sur sa surface extérieure. Les deux rouleaux sont très peu espacés, reliés à l'arbre et constituent ensemble le rouleau d'impression en tant que tel. Les rainures périphériques constituent avec la surface intérieure du tube extérieur des conduits d'amené d'encre. L'encre est amenée à partir du centre vers la périphérie par des passages aménagés dans une tête de cylindre entre des canaux usiné sur la surface d'un disque et recouvert d'une plaque vissée. Cette solution n'est pas satisfaisante car, d'une part, la tête de cylindre est assez lourde et elle ne garantit pas une bonne étanchéité surtout si le fluide est sous une certaine pression, et d'autre part, la constitution du rouleau d'impression par deux rouleaux concentriques augmente encore le poids de l'ensemble. Cette solution est également chère et complexe à réaliser, mais elle ne garantit pas une planéité de la surface d'impression du fait de la déformabilité importante de la surface poreuse du tube extérieur. Le document FR-A-2 816 880 décrit un embout selon le préambule de la revendication 1.

L'objet de l'invention est de proposer un embout qui soit à la fois léger, rigide, qui permette un démontage facile du tube intérieur, qu'on puisse monter sans indexage et de façon étanche aux fluides comme l'air et qui permette un équilibrage aisé.

L'invention concerne également un rouleau comprenant ledit embout.

L'embout selon l'invention est destiné à constituer une entretoise pour un rouleau constitué de deux tubes concentriques d'axe xx', il comprend des rayons reliant deux parties cylindriques intérieure et extérieure, il est caractérisé en ce qu'un circuit de fluide partant du centre vers la périphérie comprend une première gorge circonférentielle disposée dans la partie cylindrique intérieure et une deuxième gorge circonférentielle disposée dans la partie cylindrique extérieure reliées par au moins une canalisation. Cet embout permet de réduire la masse du rouleau de 20 à 70% préférentiellement 20 à 50% et de faciliter l'équilibrage du rouleau en garantissant l'accessibilité à l'intérieur du rouleau entre les deux tubes et de permettre un montage facile sans index grâce aux gorges circonférentielles. Un embout avec des rayons permet l'accès à l'intérieur du rouleau quand celui-ci est monté et permet ainsi à la fois un équilibrage plus fin qu'avec des embouts pleins qui obligent à percer le tube extérieur et une invisibilité de cet équilibrage de l'extérieur du rouleau.

Avantageusement le fluide est de l'air comprimé. De par sa construction, l'invention garantit l'étanchéité à l'air sous pression.

Avantageusement, l'embout comprend une bague dans la partie cylindrique intérieure. Cette bague fait office de butée pour le tube intérieur et de coaxialité de l'axe par rapport à l'extérieur. Il est ainsi possible de démonter le tube intérieur de façon réversible, à la différence des solutions où le tube intérieur est collé qui obligent à la destruction de l'embout et/ou du tube. La bague pourra par exemple être en inox.

Avantageusement, l'embout est recouvert d'une bague en matériau non métallique conducteur électrique. Ceci permet d'assurer un critère antistatique par exemple >1Mohm sur 100 volts comme par exemple le composite. Le matériau non métallique évite la corrosion galvanique de l'embout si celui-ci est en acier et permet une continuité de matière avec le tube extérieur quand celui-ci est en matériau composite. L'utilisation d'une puce RFID dans le cliché nécessite une surface non métallique pour son repérage et son positionnement sur le rouleau d'impression. Avantageusement, la conduite est disposée entre deux rayons. La conduite est alors constituée d'un tube, par exemple cylindrique, qui peut être rapportée sur l'embout. L'utilisation d'un tube au lieu d'un perçage permet de mieux maitriser les dimensions du conduit, en effet, il est plus facile d'obtenir des diamètres précis sur un tube qu'avec un perçage. L'utilisation de tubes permet également de pouvoir réduire au maximum la taille des ailettes qui n'ont plus besoin de conduire l'air.

Avantageusement, l'embout comprend deux conduites. La répartition du fluide dans le rouleau est ainsi mieux équilibrée.

Avantageusement, la bague composite comprend un perçage axial relié à la deuxième gorge circonférentielle. Ce perçage peut être réalisé à n'importe quel endroit de la périphérie de la bague composite, ce qui permet de percer le nombre de trous nécessaires pour alimenter en fluide ou en air le tube extérieur. Il est possible de disposer des canaux à l'intérieur du tube extérieur et donc d'alimenter en fluide ou en air ces canaux par l'intermédiaire des conduits reliant le centre du rouleau au tube extérieur.

Avantageusement, la deuxième gorge circonférentielle est disposée dans la bague composite. La deuxième gorge circonférentielle est ainsi située au plus près du tube extérieur.

Avantageusement, la première gorge circonférentielle est disposée dans une bague centrale de la partie cylindrique intérieure. La première gorge circonférentielle est ainsi disposée au plus près de l'arrivée du fluide.

Avantageusement, l'embout est en composite. La réalisation d'un embout 100% composite permet de réduire encore le poids du rouleau.

Avantageusement, les rayons sont constitués d'ailettes. Ces ailettes pourront être réalisées par exemple par usinage d'une pièce, par fonderie ou moulage composite

Avantageusement, les rayons sont constitués de treillis. Les rayons ou les ailettes pourront être réalisée par impression 3D en matériau composite ou non.

L'invention concerne également, un rouleau constitué de deux tubes concentriques, extérieur et intérieur, d'axe xx', il est caractérisé en ce qu'il comprend au moins un embout avec au moins une des caractéristiques précédentes. Le rouleau équipé de ce type d'embout est ainsi allégé et étanche. Le tube intérieur pourra être constitué par un arbre d'entrainement ou un tube spécifique tel qu'un tube de guidage.

Avantageusement, les tubes sont en matériaux composites. Ce matériau a l'avantage d'être particulièrement léger.

Avantageusement, le tube extérieur est fixé à l'embout. Le tube extérieur est par exemple collé sur l'embout.

Avantageusement, le tube intérieur est monté de façon démontable à l'embout. En effet, chaque embout comprenant une bague démontable qui fait office de butée, il est possible de la retirer et ainsi libérer le tube intérieur.

Avantageusement, le tube extérieur est en partie poreux. Le tube extérieur d'impression doit pouvoir laisser passer l'air, pour ce faire il doit comprendre soit un ou plusieurs canaux disposés dans le matériau composite soit être constitué d'un composite en partie poreux. Le convoyage de l'air à l'intérieur du tube extérieur pourra par exemple être réalisé selon le brevet FR 2 847 847 en laissant des interstices vides de résine, cela n'augmente pas la masse, garantit l'étanchéité, l'équilibrage et l'homogénéité de la distribution sur la longueur dudit tube. Il est également possible dans cet exemple de remplacer une partie du carbone par un matériau de basse densité >1 comme par exemple une mousse structurelle pour assurer un meilleur ratio masse/rigidité.

Avantageusement, le rouleau comprend un embout avec une clavette d'indexation. Cette clavette permet, par exemple, l'indexation des clichés.

Les rouleaux selon l'invention pourront être utilisé pour:
- Les machines d'impression,
- Les machines textile tissée, non-tissé
- Les machines plastique, film et papier
- Les rouleaux de guidage
- Les systèmes de convoyage.

D'autres avantages pourront encore apparaître à l'homme du métier à la lecture des exemples ci-dessous, illustrés par les figures annexées, donnés à titre d'exemple :
- La figure 1 est une vue éclatée en perspective d'un rouleau avec deux embouts dont un selon l'invention,
- La figure 2 est une vue en perspective d'un embout selon l'invention du côté intérieur du rouleau,
- La figure 3 est une vue en perspective d'un embout selon l'invention du côté extérieur du rouleau,
- La figure 4 est une vue en perspective du deuxième embout du rouleau du côté extérieur,
- La figure 4A est un détail de la clavette du deuxième embout,

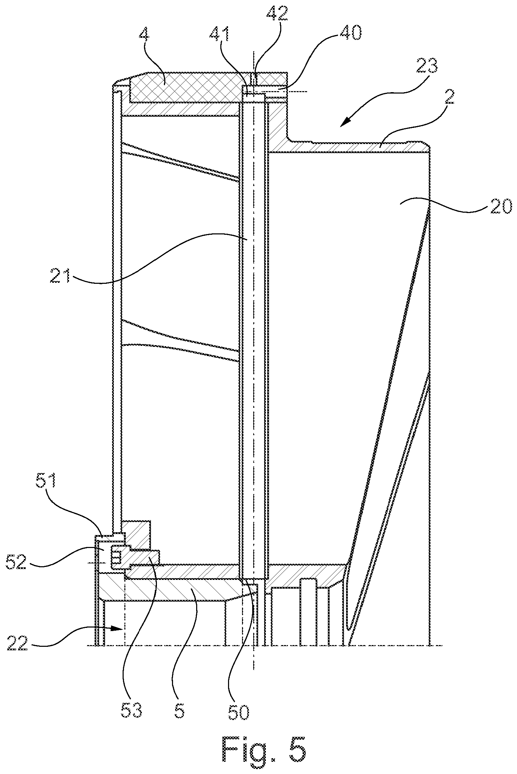

- La figure 5 est une coupe de l'embout selon l'invention au niveau du conduit d'air,
- La figure 6 est une coupe du deuxième embout au niveau de la clavette
- La figure 7 est une vue en perspective d'une première variante de l'invention,
- La figure 8 est un détail d'un rayon selon une deuxième variante de l'invention.

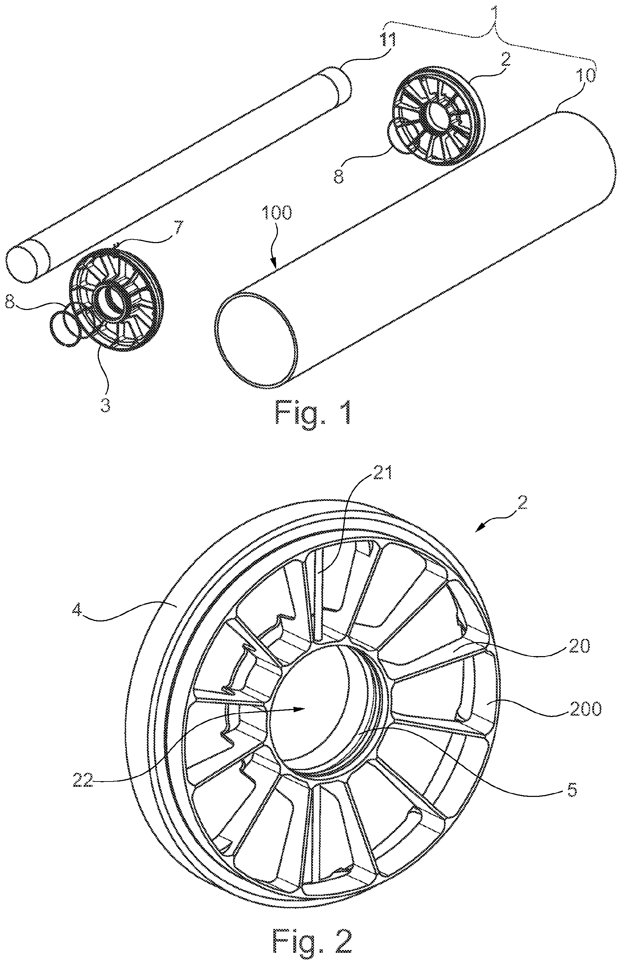

Le rouleau 1 illustré figure 1 est constitué de deux tubes 10 et 11 montés de façon concentrique. Le tube extérieur 10 a un diamètre supérieur au tube intérieur 11. Le rouleau 1 comporte également deux embouts 2 et 3 disposés de chaque côté et assurant un écart constant entre les deux tubes. Les tubes 10 et 11 ainsi que les embouts 2 et 3 sont alignés selon un axe xx' lorsqu'ils sont montés.

Le tube extérieur 10 est parcouru par un ou plusieurs canaux de distribution de fluide ou d'air débouchant sur des buses 100. Le tube extérieur 10 pourra, par exemple, comporter une couche poreuse pour distribuer l'air.

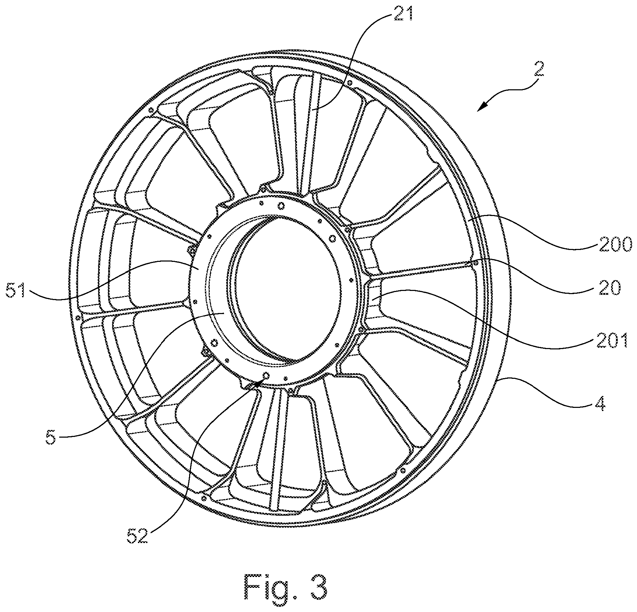

L'embout 2 en vue plus détaillée aux figures 2 et 3 comprend des rayons 20 reliant deux parties cylindriques intérieure 201 et extérieure 200 et disposés de façon équidistante et deux conduites 21 placées de façon symétrique par rapport à l'axe xx'. Les conduites 21 pourront être en aluminium par exemple. L'embout 2 est recouvert d'une bague composite 4 placé et collé sur la périphérie dudit embout 2. Il est ouvert en son centre d'un trou 22 dans lequel est disposée une bague centrale 5.

Les rayons 20 sont échancrés et/ou biseautés afin de réduire au maximum le poids de l'embout 2.

L'embout 2 présente un décrochement périphérique 23 permettant le positionnement et le collage du tube extérieur 10.

La bague composite 4 est pourvue d'une première gorge circonférentielle 41 dans sa partie intérieure et elle est percée au moins un trou 40 axial dirigé selon l'axe xx' et relié à la gorge circonférentielle 41, d'un côté et à un canal de fluide ou d'air disposé dans le tube extérieur 10 de l'autre. Elle est également percée d'une buse 42 radiale. Dans cet exemple la première gorge circonférentielle 40 est fermée sur trois de ses cotés par la bague composite 4, elle pourrait n'être fermé que sur deux côtés, le troisième étant fermé par le tube extérieur 10, sans sortir du cadre de l'invention.

La bague centrale 5 présente une deuxième gorge circonférentielle 50 à une de ses extrémités et dirigée vers l'extérieur, l'autre extrémité est pourvue d'un épaulement périphérique 51 percé de trou 52 destiné à recevoir une vis 53 pour la fixation de ladite bague 5. La deuxième gorge circonférentielle 50 est ouverte afin de pour laisser passer l'air.

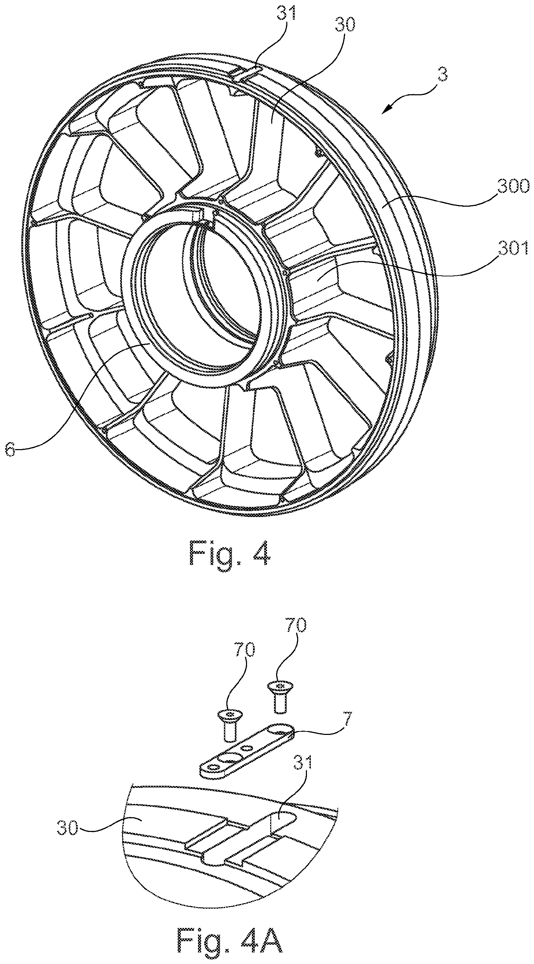

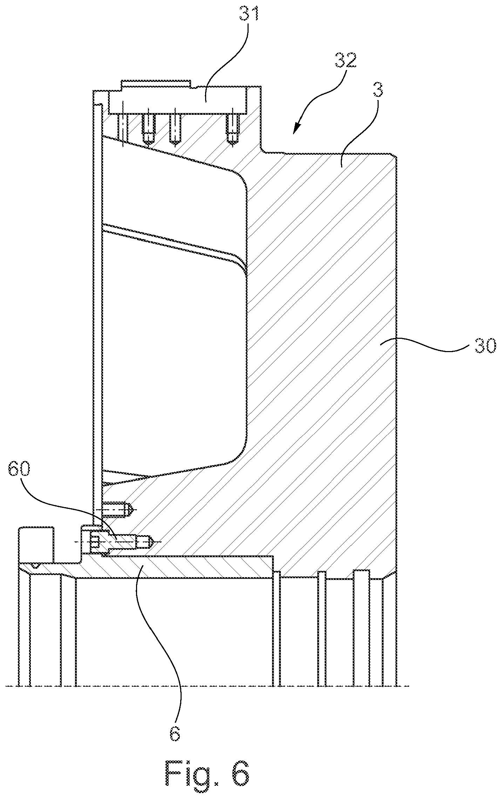

Le deuxième embout 3, illustré figures 4 et 6, comprend des rayons 30 reliant deux parties cylindriques intérieure 301 et extérieur 300 et disposés de façon équidistante et une deuxième bague centrale 6. L'embout 3 est usiné axialement sur la périphérie pour former un évidement 31 pour disposer une clavette 7. Le fond de l'évidement 31 peut être pellable afin de permettre le réglage en hauteur de la clavette 7. La clavette 7 est fixée par deux vis 7 au deuxième embout 3. La clavette permet l'indexage des clichés.

Les rayons 30 sont échancrés et/ou biseautés afin de réduire au maximum le poids du deuxième embout 3.

Le deuxième embout 3 présente un décrochement périphérique 32 permettant le positionnement et le collage de l'autre extrémité du tube extérieur 10.

La bague centrale 6 est relié au deuxième embout 3 à l'aide de vis 60.

Les embouts 2 et 3 ont chacun une bague 5 et 6 démontable qui permettent de bloquer le tube intérieur 11 et de pouvoir le changer en dévissant les vis 53 et 60 et en retirant les bagues 5 et 6.

Des joints 8 sont placés dans des rainures circulaires entre les bagues 5 et 6 et les extrémités du tube intérieur 11 afin de garantir l'étanchéité
Nous allons maintenant décrire comment le rouleau selon l'invention est monté.

Les embouts 2 et 3 sont collés à chaque extrémité du tube extérieur 10, des joints 8 sont disposés à l'intérieur de chaque embout 2 et 3, la deuxième bague 6 est positionné et vissée sur le deuxième embout 3, le tube intérieur 11 est glissé dans l'embout 2 et le tube extérieur 10 jusqu'à qu'il arrive en butée sur la deuxième bague 6 puis on fixe la bague 5 sur l'embout 2. Il est possible de positionner d'abord la bague 5, puis le tube intérieur 11 et la deuxième bague 6.

Pour démonter le tube intérieur 11, il suffit de dévisser une des vis 53 ou 60 pour sortit une des bagues 5 ou 6 et enlever la tube intérieur 11 pour le changer.

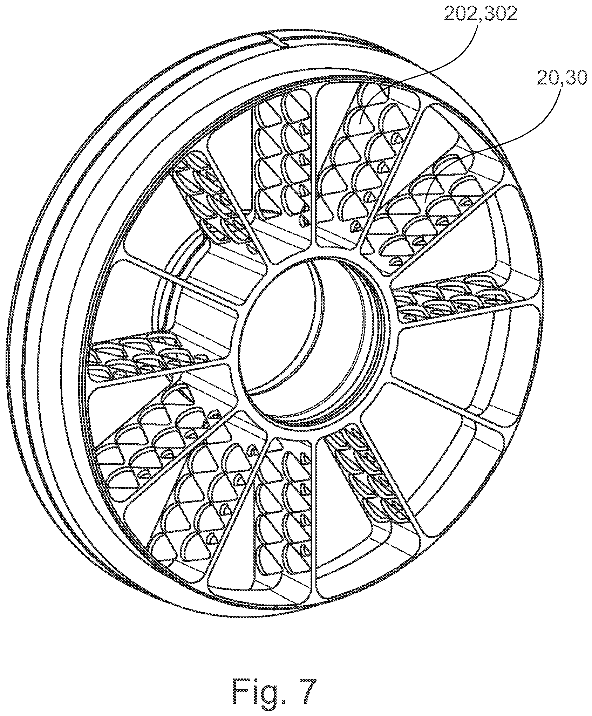

La première variante illustrée à la figure 7 comprend des rayons 20 et 30 percés de trous 202 et 302 en forme de gouttes d'eau, d'autres formes de trous pourraient être envisagées. Ces trous sont par exemple réalisés par usinage.

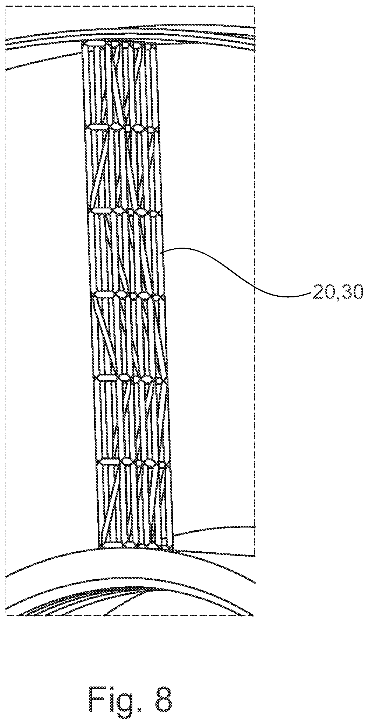

Dans la deuxième variante illustrée à la figure 8, les rayons 20, 30 sont réalisés sous forme de treillis.

Les rayons 20 et 30 des première et deuxième variantes seront de préférence réalisés par fabrication additive comme l'impression 3D.

## Revendications

1. Embout (2) destiné à constituer une entretoise pour un rouleau constitué de deux tubes concentriques (10, 11) d'axe xx' et comprenant des rayons (20) reliant deux parties cylindriques intérieure (201) et extérieure (200), **caractérisé en ce qu'**un circuit de fluide partant du centre vers la périphérie comprend une première gorge circonférentielle (50) disposée dans la partie cylindrique intérieure (201) et une deuxième gorge circonférentielle (41) disposée dans la partie cylindrique extérieure (200) reliées par au moins une conduite (22) .

2. Embout (2) selon la revendication 1, caractérisé en ce le fluide est de l'air comprimé.

3. Embout (2) selon les revendications 1 ou 2, **caractérisé en ce qu'**il comprend une bague (5) dans la partie cylindrique intérieure (201).

4. Embout (2) selon une des revendications précédentes, **caractérisé en ce qu'**il est recouvert d'une bague en matériau non métallique conducteur électrique (4) pour former une bague composite.

5. Embout (2) selon une des revendications précédentes, **caractérisé en ce que** la conduite (22) est disposée entre deux rayons (20).

6. Embout (2) selon une des revendications précédentes, **caractérisé en ce qu'**il comprend deux conduites (22).

7. Embout (2) selon une des revendications 4 à 6, **caractérisé en ce que** la bague composite (4) comprend un perçage axial (40) relié à la deuxième gorge circonférentielle (41).

8. Embout (2) selon une des revendications 4 à 6, **caractérisé en ce que** la deuxième gorge circonférentielle (41) est disposée dans la bague composite (4).

9. Embout (2) selon une des revendications précédentes, **caractérisé en ce que** la première gorge circonférentielle (50) est disposée dans une bague centrale (5) de la partie cylindrique intérieure (201).

10. Embout (2) selon une des revendications précédentes, **caractérisé en ce qu'**il est en composite.

11. Embout (2) selon une des revendications précédentes, **caractérisé en ce que** les rayons (20) sont constitués d'ailettes.

12. Embout (2) selon une des revendications précédentes, **caractérisé en ce que** les rayons (20) sont constitué de treillis.

13. Rouleau (1) constitué de deux tubes concentriques extérieur (10) et intérieur (11) d'axe xx', **caractérisé en ce qu'**il comprend un embout (2) selon une des revendications précédentes.

14. Rouleau (1) selon la revendication précédente, **caractérisé en ce que** les tubes (10, 11) sont en matériaux composites

15. Rouleau (1) selon une des revendications 13 ou 14, **caractérisé en ce que** le tube extérieur (10) est fixé à l'embout (2).

16. Rouleau (1) selon une des revendications 13 à 15, **caractérisé en ce que** le tube intérieur (11) est monté de façon démontable à l'embout (2).

17. Rouleau (1) selon une des revendications 13 à 16, **caractérisé en ce que** le tube extérieur (10) est en partie poreux.

18. Rouleau (1) selon une des revendications 13 à 17, **caractérisé en ce qu'**il comprend un embout (3) avec une clavette d'indexation (7).

## Patentansprüche

1. Endstück (2), das dazu bestimmt ist, einen Abstandshalter für eine Walze zu bilden, die aus zwei konzentrischen Rohren (10, 11) mit der Achse xx' besteht und Speichen (20) umfasst, die einen inneren (201) und einen äußeren (200) zylindrischen Teil miteinander verbinden, **dadurch gekennzeichnet, dass** ein von der Mitte zum Umfang verlaufender Fluidkreislauf eine erste Umfangsnut (50), die in dem inneren zylindrischen Teil (201) angeordnet ist, und eine zweite Umfangsnut (41), die in dem äußeren zylindrischen Teil (200) angeordnet ist, die durch mindestens eine Leitung (22) verbunden sind, umfasst.

2. Endstück (2) nach Anspruch 1, **dadurch gekennzeichnet, dass** das Fluid Druckluft ist.

3. Endstück (2) nach Anspruch 1 oder 2, **dadurch gekennzeichnet, dass** es im inneren zylindrischen Teil (201) einen Ring (5) umfasst.

4. Endstück (2) nach einem der vorhergehenden Ansprüche, **dadurch gekennzeichnet, dass** es mit einem Ring aus elektrisch leitfähigem, nicht-metallischem Material (4) überzogen ist, um einen Verbundring zu bilden.

5. Endstück (2) nach einem der vorhergehenden Ansprüche, **dadurch gekennzeichnet, dass** die Leitung (22) zwischen zwei Speichen (20) angeordnet ist.

6. Endstück (2) nach einem der vorhergehenden Ansprüche, **dadurch gekennzeichnet, dass** es zwei Leitungen (22) umfasst.

7. Endstück (2) nach einem der Ansprüche 4 bis 6, **dadurch gekennzeichnet, dass** der Verbundring (4) eine mit der zweiten Umfangsnut (41) verbundene Axialbohrung (40) umfasst.

8. Endstück (2) nach einem der Ansprüche 4 bis 6, **dadurch gekennzeichnet, dass** die zweite Umfangsnut (41) in dem Verbundring (4) angeordnet ist.

9. Endstück (2) nach einem der vorhergehenden Ansprüche, **dadurch gekennzeichnet, dass** die erste Umfangsnut (50) in einem Mittelring (5) des inneren zylindrischen Teils (201) angeordnet ist.

10. Endstück (2) nach einem der vorhergehenden Ansprüche, **dadurch gekennzeichnet, dass** es aus Verbundwerkstoff hergestellt ist.

11. Endstück (2) nach einem der vorhergehenden Ansprüche, **dadurch gekennzeichnet, dass** die Speichen (20) aus Rippen gebildet sind.

12. Endstück (2) nach einem der vorhergehenden Ansprüche, **dadurch gekennzeichnet, dass** die Speichen (20) aus Gittern gebildet sind.

13. Walze (1), bestehend aus zwei konzentrischen Außenrohren (10) und Innenrohren (11) der Achse xx', **dadurch gekennzeichnet, dass** sie ein Endstück (2) nach einem der vorhergehenden Ansprüche umfasst.

14. Walze (1) nach dem vorhergehenden Anspruch, **dadurch gekennzeichnet, dass** die Rohre (10, 11) aus Verbundwerkstoffen hergestellt sind.

15. Walze (1) nach einem der Ansprüche 13 oder 14, **dadurch gekennzeichnet, dass** das Außenrohr (10) am Endstück (2) befestigt ist.

16. Walze (1) nach einem der Ansprüche 13 bis 15, **dadurch gekennzeichnet, dass** das Innenrohr (11) lösbar am Endstück (2) befestigt ist.

17. Walze (1) nach einem der Ansprüche 13 bis 16, **dadurch gekennzeichnet, dass** das Außenrohr (10) teilweise porös ist.

18. Walze (1) nach einem der Ansprüche 13 bis 17, **dadurch gekennzeichnet, dass** sie ein Endstück (3) mit einem Indexierungsschlüssel (7) umfasst.

## Claims

1. End piece (2) suitable for forming a spacer for a roll consisting of two concentric tubes (10, 11) with axis xx' and comprising spokes (20) connecting two inner (201) and outer (200) cylindrical portions, **characterized in that** a fluid circuit originating from the centre towards the periphery comprises a first circumferential groove (50) arranged in the inner cylindrical portion (201) and a second circumferential groove (41) arranged in the outer cylindrical portion (200) connected by at least one pipe (22).

2. End piece (2) according to Claim 1, **characterized in that** the fluid is compressed air.

3. End piece (2) according to Claim 1 or 2, **characterized in that** it comprises a ring (5) in the inner cylindrical portion (201).

4. End piece (2) according to one of the previous claims, **characterized in that** it is covered by a ring made from an electrically conductive non-metallic material (4) to form a composite ring.

5. End piece (2) according to one of the previous claims, **characterized in that** the pipe (22) is arranged between two spokes (20).

6. End piece (2) according to one of the previous claims, **characterized in that** it comprises two pipes (22).

7. End piece (2) according to one of Claims 4 to 6, **characterized in that** the composite ring (4) comprises an axial hole (40) connected to the second circumferential groove (41) .

8. End piece (2) according to one of Claims 4 to 6, **characterized in that** the second circumferential groove (41) is arranged in the composite ring (4).

9. End piece (2) according to one of the previous claims, **characterized in that** the first circumferential groove (50) is arranged in a central ring (5) of the inner cylindrical portion (201).

10. End piece (2) according to one of the previous claims, **characterized in that** it is made from a composite.

11. End piece (2) according to one of the previous claims, **characterized in that** the spokes (20) consist of fins.

12. End piece (2) according to one of the previous claims, **characterized in that** the spokes (20) consist of mesh.

13. Roll (1) consisting of two concentric outer (10) and inner (11) tubes with axis xx', **characterized in that** it comprises one end piece (2) according to one of the previous claims.

14. Roll (1) according to the previous claim, **characterized in that** the tubes (10, 11) are made from composite materials.

15. Roll (1) according to one of Claims 13 or 14, **characterized in that** the outer tube (10) is fastened to the end piece (2).

16. Roll (1) according to one of Claims 13 to 15, **characterized in that** the inner tube (11) is removably mounted on the end piece (2).

17. Roll (1) according to one of Claims 13 to 16, **characterized in that** the outer tube (10) is partially porous.

18. Roll (1) according to one of Claims 13 to 17, **characterized in that** it comprises an end piece (3) with an indexing shim (7).
